Europäisches Patentamt

European Patent Office

Office européen des brevets

(11) Publication number: **0 412 637 A1**

# EUROPEAN PATENT APPLICATION

(21) Application number: 90305511.9

(22) Date of filing: 21.05.90

(51) Int. Cl.⁵: **B62D 5/06**

(30) Priority: 08.08.89 GB 8918097

(43) Date of publication of application:
13.02.91 Bulletin 91/07

(84) Designated Contracting States:
DE FR IT

(71) Applicant: TRW CAM GEARS LIMITED
Old Church Road
Clevedon Avon BS21 6NJ(GB)

(72) Inventor: Wilder, Anthony John
27 Tereslake Green
Westbury-on-Trym, Bristol, BS10 6LT(GB)

(74) Representative: Walters, Frederick James et al
Urquhart-Dykes & Lord 91 Wimpole Street
London W1M 8AH(GB)

(54) A vehicle steering system.

(57) A vehicle steering system has an hydraulic servo motor 4 for providing power assistance and a pump 5 for supplying working fluid to the servomotor under control of a valve 8 responsive to a steering input 3. Energisation of the pump motor 6 is controlled by a normally closed relay 9. A switch 14 controls energisation of the relay to open the contacts 10 thereof, the switch 14 is responsive to relative displacement between components in the steering gear 1 or valve 8 effected by a steering input so that the switch 14 opens to de-energise the relay 9 and thereby energise the pump motor 6 so that working fluid is available for the servomotor 4 only as required to assist a steering manoeuvre in response to a steering input.

## A VEHICLE STEERING SYSTEM

### TECHNICAL FIELD & BACKGROUND ART

The present invention relates to a vehicle steering system and is particularly concerned with such systems of the kind in which power assistance for a steering manoeuvre is provided by an hydraulic servomotor (such as a double acting piston and cylinder device) working fluid for which is provided by an electrically driven pump and controlled by a valve which determines the supply of the working fluid to the servo motor in response to a steering input to assist the intended steering manoeuvre. Known steering systems of the kind mentioned having electrically driven pumps are usually inefficient as providing a continual drain on the electrical energy available during use of the vehicle and it is an object of the present invention to provide a vehicle steering system in which wastage of electrical energy is alleviated.

### STATEMENT OF INVENTION & ADVANTAGES

According to the present invention there is provided a vehicle steering system comprising an hydraulic servomotor providing power assistance for a steering manoeuvre; a pump driven by an electric motor for supplying working fluid; a control valve for controlling supply of the working fluid to the servomotor in response to a steering input; an electrical relay controlling energisation of the pump motor and which is normally closed for energising the pump motor; switch means controlling energisation of the relay and which switch means is closed to energise and open the relay so that the pump motor is de-energised, and wherein said switch means is responsive to a said steering input to open and de-energise the relay so that the relay closes and energises the pump motor for the supply of said working fluid.

By the present invention the pump motor is energised to actuate the pump for the supply of working fluid only as required when fluid pressure is needed to assist a steering manoeuvre in response to a steering input. For a large proportion of the time which a vehicle is in use, power assistance for steering manoeuvres will not normally be required and for such periods the pump motor will remain de-energised. The electrical energy consumed by energisation of the relay to de-energise the pump motor will be considerably less than the electrical energy consumed by a continuously running pump motor and it will be appreciated therefore that an appreciable saving in electrical energy (and therefore in the general power supply of the vehicle) can be achieved. Furthermore, in the event of a failure in the electrical power supply to energise the relay, the relay will automatically revert to its normally closed condition to energise the pump motor and therefore ensure that working fluid is available to provide power assistance.

The normally closed switch means will be arranged to open and de-energise the relay in response to a steering input for a steering manoeuvre in either sense of direction. Conveniently the control valve will have associated therewith or include two components which are displaceable relative to each other from a neutral condition in response to a said steering input and the switch means is arranged to be closed with said components in their neutral condition and to respond to open as the two components are relatively displaced from their neutral condition. A preferred form of switch means is the subject of our co-pending British Patent Application No. 89 18 098.8. However, it will be appreciated to persons skilled in the art that the structure and location of the switch means in the steering system can be varied as considered appropriate for a particular vehicle layout.

### DRAWINGS

One embodiment of a vehicle steering system constructed in accordance with the present invention will now be described, by way of example only, with reference to the accompanying schematic drawing of the system.

### DETAILED DESCRIPTION OF DRAWING

The steering system has a conventional form of rack and pinion gear 1 in which a rack bar 2 is longitudinally displaceable to provide a steering output for manoeuvring road wheels of the vehicle in response to rotation of a pinion by a steering input torque provided through a steering column 3. Power assistance is provided for longitudinal displacement of the rack bar 2 by an hydraulic servomotor 4 in the form of a double acting piston and cylinder device which is associated with the rack bar in known manner. Working fluid for the servomotor 4 is provided by a pump 5 driven by an electric motor 6. The pump 5 supplies hydraulic fluid drawn from a reservoir 7 to an open centre control valve 8 which is responsive to a steering input from the column 3 in known manner to control fluid flow to and from opposed chambers of the servomotor 4 and to the reservoir 7 so that the servomotor assists the steering manoeuvre which is intended by the steering input.

Energisation of the pump motor 6 is controlled by an electrical relay 9 having contacts 10 which are normally closed (as indicated by the broken lines 10a). The motor 6 is connectable through the contacts 10 and by way of a high current fuse 11 and an ignition switch 12 of the vehicle to a battery 13. Energisation of the relay 9 is controlled by a switch 14 which is connected across a capacitor 15 and in series through the relay solenoid and a low current fuse 16 to the ignition switch 12. The switch 14 has contacts 17 which when closed (and with the ignition switch 12 closed) cause the relay to be energised to open the contacts 10 and thereby de-energise the pump motor 6 so that there is no supply of hydraulic fluid to the servo motor.

The open centre control valve 8 has an open centre neutral condition in which, and as is well known in the art, both chambers of the servomotor 4 and the fluid pressure line from the pump 6 communicate with the reservoir 7. In response to a steering input the valve is displaced from its neutral condition for directing hydraulic fluid as appropriate to the servomotor 4 for the provision of power assistance. During such a steering input to the column 3 there will be a relative displacement between two components (shown diagrammatically at 18) from a neutral condition of those components. The relatively displaceable components 18 are conveniently in the rack and pinion gear 1 or the control valve 8 where they may be associated with the steering column 3. However, the relay control switch 14 is coupled as indicated at 19 to be controlled by relative displacement of the two components from their neutral condition and in response to a steering input torque which effects in a steering manoeuvre in either sense of direction. Preferably the relay switch 14 is coupled to be responsive to relative axial displacement of two components in the control valve 8 in the manner discussed in our co-pending British Patent Application No. 89 18 098.8.

With the control valve 8 in its neutral condition the relay switch 14 is arranged to close its contacts 17 thereby energising the relay 9 as aforementioned. In response to a steering input being applied to the gear 1 to effect a steering manoeuvre, the relative displacement effected between the components as aforementioned displaces the switch 14 to open its contacts 17 thereby de-energising the relay 9 and permitting the contacts thereof to adopt their normally closed condition 10a. The pump motor 6 is thereby energised to supply hydraulic working fluid to the servo motor 4 under control of the valve 8 for assisting the intended steering manoeuvre. Consequently the pump motor 6 will be energised as required to supply working fluid pressure to provide power assistance during a steering manoeuvre. When the steering input torque ceases and the control valve reverts to its neutral condition, the relay control switch 14 will revert to its closed condition to energise the relay 9 and again de-energise the pump motor.

In the event that there is a failure in the electrical circuit through which the relay 9 is energised, the relay contacts will automatically revert to their normally closed condition 10a. This will cause the pump motor 6 to run continually provided that the ignition switch 12 is closed and provide working fluid to the control valve 8 and such fluid can circulate in conventional manner through the hydraulic system when the control valve is in its neutral condition.

If "switch bounce" is found to be a problem, particularly with the relay control switch 14, a relay with a time delay can be used so that the relay contacts 10 remain closed for a predetermined period, for example 5 to 10 seconds, after the relay has been energised so that if the relay switch 14 closes momentarily power assistance will not be lost. If after the end of the delay period the control switch 14 is open, a new delay period is initiated but if the switch 14 has in the meantime closed and remained closed the pump motor will be de-energised.

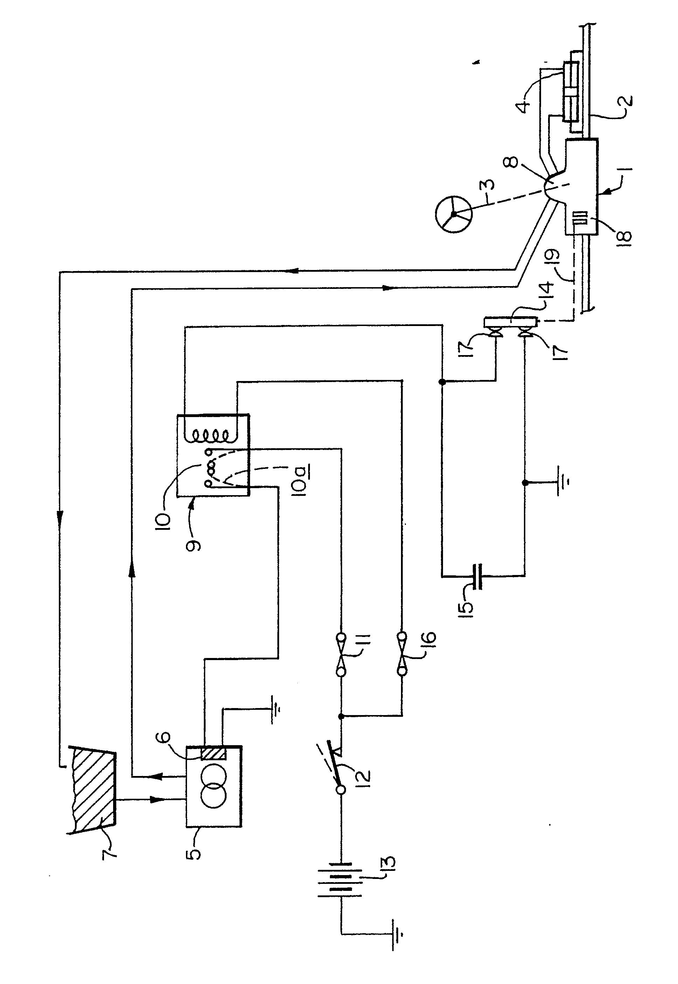

## Claims

1. A vehicle steering system comprising an hydraulic servomotor providing power assistance for a steering manoeuvre; a pump driven by an electric motor for supplying working fluid; a control valve for controlling supply of the working fluid to the servomotor in response to a steering input; an electrical relay controlling energisation of the pump motor and which is normally closed for energising the pump motor; switch means controlling energisation of the relay and which switch means is closed to energise and open the relay so that the pump motor is de-energised, and wherein said switch means is responsive to a said steering input to open and de-energise the relay so that the relay closes and energises the pump motor for the supply of said working fluid.

2. A system as claimed in claim 1 in which the switch means is controlled by relative displacement between two components from a neutral condition of those components and in response to a steering input to effect a steering manoeuvre in either sense of direction, said switch means being closed with the components in their neutral condition and opening in response to relative displacement between the components from their neutral condition.

3. A system as claimed in either claim 1 or claim 2 in which the control valve is of the open centre kind whereby in a neutral condition of that valve when no steering input is applied, hydraulic fluid from the pump may circulate through the control valve.

4. A system as claimed in any one of the preceding claims and comprising an ignition switch which when closed provides electrical power for energising the pump motor and energising the relay.

5. A system as claimed in any one of the preceding claims in which the relay has a time delay whereby it remains closed to energise the pump motor for a predetermined period following its energisation.

## DOCUMENTS CONSIDERED TO BE RELEVANT

EP 90305511.9

| Category | Citation of document with indication, where appropriate, of relevant passages | Relevant to claim | CLASSIFICATION OF THE APPLICATION (Int. Cl.5) |
|---|---|---|---|
| A | US - A - 4 453 615 (KANAZAWA) * Fig. 1 * | | B 62 D 5/06 |
| A | EP - A2/A3 - 0 091 590 (NISSAN) * Fig. 5-15 * | | |

TECHNICAL FIELDS SEARCHED (Int. Cl.5)

B 62 D

The present search report has been drawn up for all claims

| Place of search | Date of completion of the search | Examiner |
|---|---|---|
| VIENNA | 16-11-1990 | PANGRATZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)